## Europäisches Patentamt

## European Patent Office

## Office européen des brevets

(11) Veröffentlichungsnummer: **0 188 997**
**B1**

(12) **EUROPÄISCHE PATENTSCHRIFT**

(45) Veröffentlichungstag der Patentschrift:
**07.12.88**

(51) Int. Cl.⁴: **G 01 G 3/08,** G 01 L 1/04

(21) Anmeldenummer: **85810017.5**

(22) Anmeldetag: **22.01.85**

(54) **Massen- und Kraftmessgerät.**

(43) Veröffentlichungstag der Anmeldung:
**30.07.86 Patentblatt 86/31**

(45) Bekanntmachung des Hinweises auf die Patenterteilung:
**07.12.88 Patentblatt 88/49**

(84) Benannte Vertragsstaaten:
**AT CH DE FR GB IT LI NL SE**

(56) Entgegenhaltungen:
**EP-A- 0 016 238**
**EP-A- 0 017 581**
**EP-A- 0 080 702**
**EP-A- 0 082 250**
**CH-A- 353 555**
**US-A- 3 994 161**
**US-A- 4 022 288**
**US-A- 4 300 648**

(73) Patentinhaber: **K-TRON Patent AG, Limmatquai 3,
CH-8001 Zürich (CH)**

(72) Erfinder: **Wirth, Johannes, Sonnenbergstrasse 55,
CH-8032 Zürich (CH)**
Erfinder: **Gallo, Mario, Dr., Krönleinstrasse 1,
CH-8044 Zürich (CH)**

(74) Vertreter: **Eder, Carl E. et al, Patentanwaltsbüro EDER
AG Münchensteinerstrasse 2, CH-4052 Basel (CH)**

ACTORUM AG

Beschreibung

Die vorliegende Erfindung bezieht sich auf ein Massen- und Kraftmessgerät gemäss dem Oberbegriff des Anspruchs 1. Solche Messgeräte sind bekannt, z. B. aus der US—A—4300648 und der dieser entsprechenden EP—A—16238. Bei diesen Messgeräten wird der Hauptanteil der zu messenden Grösse durch Verformung der Blattfedern der Parallelführung aufgenommen. Diese Verformung verursacht eine Verformung des elastischen, parallel mit den Blattfedern montierten Übertragungsorganes, das über das Mess-System mit dem Gestell lageschlüssig verbunden ist und auf dieses Mess-System nur einen sehr kleinen Anteil der Last überträgt.

Aus den zitierten Publikationen ist es auch bereits bekannt, solche Messgeräte mit Ausnahme des Mess-Systems, aus einem einzigen profilierten Block herzustellen. Dazu wird, z. B. durch Extrusion eines Stranges passenden Querschnittes ein Block, d. h. ein Profilstab mit mehreren Komponenten verwendet. Jede Komponente des Blockes hat eine einzige Funktion als Teil des Messgerätes. Dadurch entstehen recht komplizierte Profile des zu extrudierenden Stranges. Das Herstellungsverfahren des Stranges wird dabei kostspielig, weil teure Matrizen benötigt werden. Ferner, wegen des komplizierten Querschnittes, ist dennoch mit einem gewissen Ausschuss zu rechnen. Ein weiterer Nachteil ist die relativ grosse Höhe des Querschnittes, die es nicht erlaubt, eine niedrigere Bauhöhe des Messgerätes zu verwirklichen.

Die der Erfindung zu Grunde liegende Aufgabe besteht darin, einblöckige Messgeräte zu schaffen, bei welchen sehr vereinfachte Querschnitte eines Extrusionsstranges verwendet werden, die jedoch genügend Komponenten zur Verwirklichung aller erforderlichen Funktionen des Messgerätes enthalten und trotzdem eine niedrige Bauhöhe zulassen.

Dies wird erfindungsgemäss durch ein Massen- und Kraftmessgerät mit den Merkmalen des Anspruchs 1 verwirklicht.

In der beiliegenden Zeichnung sind Ausführungsbeispiele des Erfindungsgegenstandes schematisch dargestellt. Es zeigen:
Fig. 1 einen ersten Profilblock im Aufriss,
Fig. 2 in schaubildlicher Ansicht ein erstes Ausführungsbeispiel, das aus dem Block der Fig. 1 hergestellt ist,
Fig. 3 einen Aufriss des Messgerätes nach Fig. 2 mit teilweisem Schnitt,
Fig. 4 einen zweiten Profilblock,
Fig. 5 in schaubildlicher Ansicht ein zweites Ausführungsbeispiel, das aus dem Block der Fig. 4 hergestellt ist,
Fig. 6 den unteren Teil der Fig. 5,
Fig. 7, 8 je einen Querschnitt durch Teile des Messgerätes der Fig. 5, und
Fig. 9 eine Variante zu Fig. 4.

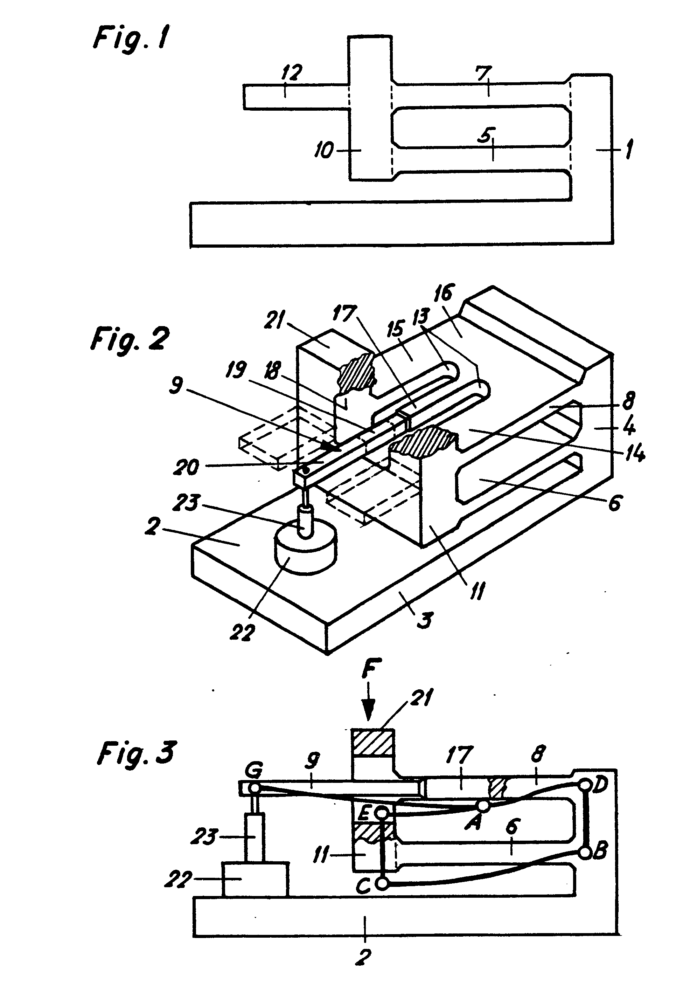

Der in Fig. 1 dargestellte Profilblock weist einen einfachen Querschnitt auf, der aus fünf Komponenten besteht. Jede dieser Komponenten dient zur Verwirklichung eines oder mehrerer Elemente des Messgerätes.

Die L-förmige Komponente 1 bildet das Gestell 2 des Messgerätes. Dieses Gestell 2 besteht aus einem horizontalen Teil 3, der als Auflagefläche dient, und einem vertikalen Teil 4.

Die Komponente 5 bildet eine flache, horizontale Blattfeder 6, die als untere Blattfeder der Parallelführung dient und somit auch an der Aufnahme des Hauptanteiles der Last teilnimmt.

Die Komponente 7 bildet ebenfalls eine flache, horizontale Blattfeder 8, die sowohl als obere Blattfeder der Parallelführung dient als auch als Teil des Übertragungsorganes 9 verwendet wird, wie weiter unten erläutert.

Die Komponente 10 bildet sowohl den Lastträger 11 als auch einen Teil des Übertragungsorganes 9.

Die letzte Komponente 12 dient nur zur Bildung des Übertragungsorganes 9.

Einige Komponenten werden durch Bearbeitung (Fräsen, Bohren) zu Elementen des Messgerätes verarbeitet.

Wie aus der Zeichnung ersichtlich, hängen die Blattfedern 6 und 8 einerseits mit dem Teil 4 des Gestelles 2 und andererseits mit dem Lastträger 11 zusammen und sind also fest sowie unlösbar mit dem Gestell bzw. dem Lastträger verbunden, d. h. zumindest gewissermassen im Gestell bzw. Lastträger eingespannt. Komponente 1 und 5 können im Wesentlichen ohne Nachbearbeitung verwendet werden. In der Komponente 7 werden zwei Nuten 13 herausgefräst, sodass die Blattfeder 8 der Parallelführung nun aus den drei zusammenhängenden Streifen 14, 15, 16 (Fig. 2) besteht. Der mittlere Streifen 17 der Komponente 7 bildet einen Teil des Übertragungsorganes 9.

In der Komponente 10 wird eine ringförmige Öffnung 18 rechteckigen Querschnittes durchbohrt, die in ihrer Mitte einen Teil 19 aufweist, derart, dass er als Verlängerung des Streifens 17 dient. In der Komponente 12 wird lediglich ein Streifen 20 aufrecht erhalten, der ebenfalls als weitere Verlängerung des Streifens 17 und des Teiles 19 dient. Der Rest der Komponente 12 (strichpunktiert dargestellt in Fig. 2) wird eliminiert.

Das aus dem Block der Fig. 1 entstandene Messgerät besteht somit aus folgenden Elementen:
— das Gestell 2, mit Teilen 3 und 4 aus der Komponente 1,
— die Parallelführung bestehend aus:
. der unteren Blattfeder 6 aus der Komponente 5,
. der oberen Blattfeder 8 mit den Streifen 14, 15, 16 aus der Komponente 7,
— der Lastträger 11 mit der oberen Lastaufnahmefläche 21 aus der Komponente 10,
— das Übertragungsorgan 9 bestehend aus dem Streifen 17 aus der Komponente 7, dem Teil 19 aus der Komponente 10 und dem Streifen 20 aus der Komponente 12.

Alle diese Elemente bestehen somit aus einem Stück. Das Messgerät wird mit einem auf dem Teil 3 befestigten Mess-System 22 ergänzt. Der Eingang dieses Mess-Systems 22 ist über eine starre Stelze 23 mit dem Ende des Übertragungsorganes 9 verbunden.

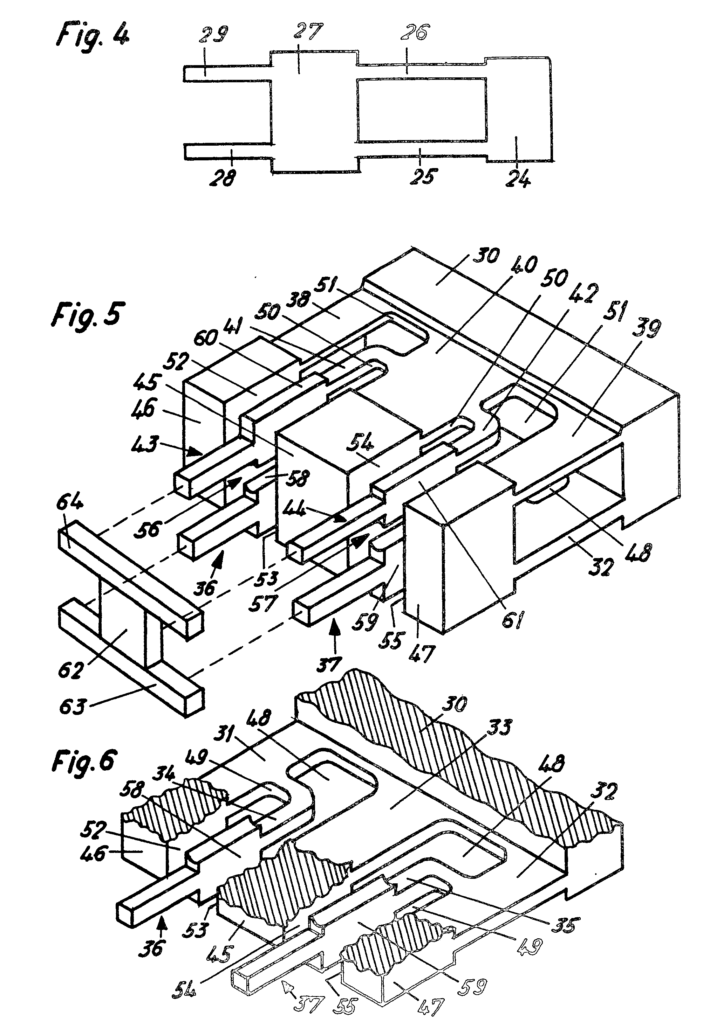

Das beschriebene Messgerät funktioniert wie folgt. Wenn eine der Last entsprechenden vertikale Kraft F auf die Lastaufnahmefläche 21 wirkt, so nehmen die Blattfedern 6 und 8 bzw. deren Teile 14, 15, 16 den Hauptteil, z.B. 99% der Last auf. Diese Blattfedern 6, 8 verformen sich dabei S-förmig, wie in Fig. 3 durch die Kurven BC und DE dargestellt. Der mittlere Teil der Blattfeder 8 (um den Punkt A) senkt sich und wird im Gegenuhrzeigerdrehsinn verdreht, sodass das rechte (wie in Fig. 2 gesehen) Ende des Übertragungsorganes 9 ebenfalls verdreht wird. Die Höhenlage seines Endes ist jedoch bei G durch die Stelze 23 festgelegt. Das Übertragungsorgan 9 muss sich also verbiegen und auf das Mess-System 22 eine Kraft, die Messkraft, ausüben, die z.B. 1% der Last entspricht.

Ein zweites Ausführungsbeispiel ist in Fig. 4–8 dargestellt. Der in Fig. 4 dargestellte Profilblock besteht aus den Komponenten 24–29. Jede dieser Komponenten dient zur Verwirklichung eines oder mehrerer Elemente des Messgerätes.

Die Komponente 24 bildet ein massives Verbindungsstück 30, dessen Funktion weiter unten erläutert wird.

Die Komponente 25 dient zur Bildung von drei Blattfedern 31, 32, 33 als Teile von zwei Parallelführungen, sowie von Teilen 34, 35 zweier Übertragungsorgane 36, 37.

Die Komponente 26 dient zur Bildung von drei Blattfedern 38, 39, 40 als Teile von zwei Parallelführungen, sowie von Teilen 41, 42 zweier Übertragungsorgane 43, 44.

Die Komponente 27 dient zur Bildung von einem Gestell 45, einem zweiteiligen Lastträger 46, 47, sowie von Teilen 58, 59, 60, 61 der Übertragungsorgane 36, 37, 43, 44.

Die Komponente 28 dient zur Bildung der Übertragungsorgane 36, 37 und die Komponente 29 zur Bildung der Übertragungsorgane 43, 44.

Zur Bildung der drei Blattfedern 31, 32, 33 und der Teile 34, 35 der Übertragungsorgane 36, 37, werden zwei innere Nuten 48 und zwei äussere Nuten 49 in der Komponente 25 herausgefräst. Die inneren Nuten 48 werden, wie in Fig. 6 dargestellt, nach aussen verbogen. Dadurch entstehen die drei Blattfedern 31, 32 und 33. Sie hängen einerseits mit dem Verbindungsstück 30 und andererseits mit der Komponente 27 zusammen. Die Breite der Blattfeder 33 gleicht der Summe der Breiten der Blattfedern 31, 32. Die Teile 34, 35 der Übertragungsorgane 36, 37 sind somit an den Blattfedern 31 bzw. 32 angeschlossen.

Zur Bildung der drei Blattfedern 38, 39, 40 und der Teile 41, 42 der Übertragungsorgane 43, 44 werden zwei innere Nuten 50 und zwei äussere Nuten 51 in der Komponente 26 herausgefräst. Die äusseren Nuten 51 werden, wie in Fig. 5 dargestellt, nach innen verbogen. Dadurch entstehen die drei Blattfedern 38, 39 und 40.

Die Breite der Blattfeder 40 gleicht der Summe der Breiten der Blattfedern 38, 39. Sie hängen einerseits mit dem Verbindungsstück 30 und andererseits mit der Komponente 27 zusammen. Die Teile 41, 42 sind somit an der Blattfeder 40 angeschlossen.

Die Nuten 48, 49 und 50, 51 liegen im wesentlichen paarweise in der gleichen vertikalen Ebene.

Die Komponente 27 weist vier vertikale Ausschnitte 52–55, die mit den erwähnten vertikalen Ebenen zusammenfallen, und zwei horizontale Bohrungen 56, 57 auf. Dadurch entstehen: das Gestell 45, der aus den zwei Teilen 46, 47 bestehende Lastträger, die Teile 58, 59, 60, 61 der Übertragungsorgane 36 bzw. 37, bzw. 43, bzw. 44.

Die Komponente 28 dient zur Bildung der Enden der Übertragungsorgane 36, 37 und die Komponente 29 derjenigen der Übertragungsorgane 43, 44.

Das ganze Messgerät, mit Ausnahme des Mess-Systems, setzt sich somit aus folgenden Elementen zusammen:

– ein Gestell 45, das in nicht dargestellter Weise auf einer Unterlage befestigt ist,

– eine erste Parallelführung bestehend aus den Blattfedern 33 und 40, die zur Parallelführung des massiven Verbindungsstückes 30 bezüglich des Gestelles 45 dient,

– eine zweite Parallelführung bestehend aus den Blattfedern 31, 38 und 32, 39, die zur Parallelführung der Teile 46 bzw. 47 des zweiteiligen Lastträgers bezüglich des Verbindungsstückes 30 dient, womit diese Teile 46, 47 auch bezüglich des Gestelles 45 parallel geführt sind,

– vier elastische Übertragungsorgane 36, 37, 43 und 44, wobei jedes aus einem Teil der Komponenten 24, 25 bzw. 26, 27 und 28 bzw. 29 besteht.

Das Mess-System 62 ist mittels zweier starrer Stäbe 63, 64, die an den Enden der Übertragungsorgane 36, 37 bzw. 43, 44 befestigt sind, am beschriebenen Hauptteil des Messgerätes angeschlossen. Dadurch ist auch die Höhenlage der Enden der Übertragungsorgane 36, 37, 43 und 44 festgelegt.

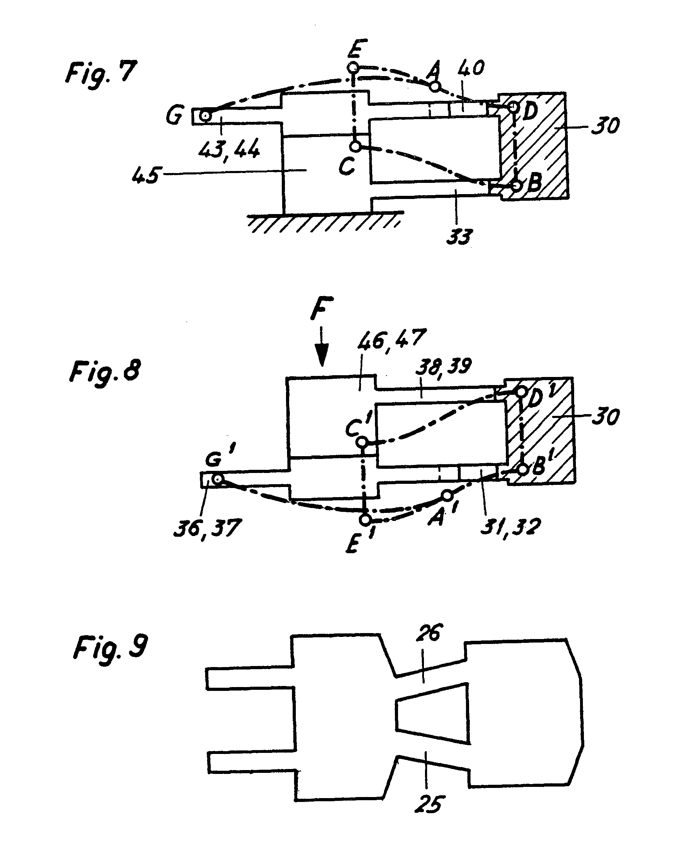

Fig. 7 und 8 sind schematisch und dienen der Erläuterung der Funktionsweise des beschriebenen Messgerätes. Fig. 7 zeigt die Verhältnisse bei Belastung entlang den Blattfedern 33, 40 und dem Gestell 45, Fig. 8 die gleichen Verhältnisse entlang der Blattfedern 31, 38 bzw. 32, 39 und dem Teil 46 bzw. 47. Wie mit Bezug auf das erste Ausführungsbeispiel dargelegt, nehmen die Blattfederpaare 31 und 38, 32 und 39, 33 und 40 den Hauptanteil der auf die Teile 46, 47 wirkenden Belastung F auf. Dabei verformen sich diese Blattfedern wie durch die Linien BC, DE bzw. B'E', D'C' angegeben. Der mittlere Teil der Blattfeder 40 (um den Punkt A) hebt sich und wird im Uhrzeigerdrehsinn verdreht, sodass die rechten (wie in Fig. 7 gesehen) Enden der Übertragungsorgane 43, 44 ebenfalls entsprechend verdreht und versetzt werden. Die mittleren Teile (um die Punkte A') der Blattfedern 31, 32 senken sich und werden im Gegenuhrzeigerdrehsinn verdreht, sodass die rechten (wie in Fig. 8 gesehen) Enden der Übertragungsorgane 36, 37 ebenfalls entsprechend verdreht und versetzt werden. Da die Enden (Punkte G, G') durch die starren Stangen 63, 64 und das Mess-System miteinander fest verbunden sind, können sie ihre Lage nicht verändern. Die verbogenen Übertragungsorgane 36, 37, 43, 44 üben somit eine Zugkraft, die Messkraft, auf das Mess-System aus, die proportional zur Belastung F ist, die jedoch höchstens z. B. 1% dieser Belastung entspricht.

In Fig. 9 ist eine Variante des Profils nach Fig. 4 dargestellt, bei welchem die Komponenten 25, 26 schräg angeordnet sind. Dies ist bei Messgeräten niedriger Bauhöhe vorteilhaft. Wenn die Lenkerpaare 33, 40 bzw. 31, 38 bzw. 32, 39 parallel und nah übereinander liegen, beeinflusst ihre Längsnachgiebigkeit die Genauigkeit der Messung, die dann nicht mehr von der Lage der Last auf dem Lastträger unabhängig ist. Durch eine schräge Anordnung der als Lenker dienenden Blattfedern wird der Einfluss ihrer Längsnachgiebigkeit ausgemerzt.

**Patentansprüche**

1. Massen- und Kraftmessgerät mit einem Gestell (2 bzw. 45), einem mittels einer aus mindestens zwei übereinander angeordneten Blattfedern (6, 8 bzw. 31, 32, 33, 38, 39, 40) bestehenden Parallelführung parallel und senkrecht geführten Lastträger (11 bzw. 46, 47), einem starren Mess-System (22 bzw. 62) und mindestens einem elastisch ausgeführten Übertragungsorgan (9 bzw. 36, 37, 43, 44), das einen Teil des Gewichtes der zu messenden Masse oder der zu messenden Kraft auf das Mess-System (22 bzw. 62) überträgt, welche Blattfedern (6, 8 bzw. 31, 32, 33, 38, 39, 40) mit dem Gestell (2 bzw. 45) und Lastträger (11 bzw. 46, 47) zusammenhängen, wobei die genannten Elemente (2, 6, 9, 11, 14, 15, 16, 22 bzw. 31, 32, 33, 36 bis 40, 43 bis 47, 62) des Messgeräts mit Ausnahme des Mess-Systems (22 bzw. 62) aus einem einzigen einstückigen, profilierten, im Querschnitt aus mehreren Komponenten (1, 5, 7, 10, 12 bzw. 24 bis 29) bestehenden Block gefertigt sind und wobei zwei übereinander angeordnete Komponenten (5, 7 bzw. 25, 26) je mindestens eine der Blattfedern (6, 8 bzw. 31, 32, 33, 38, 39, 40) bilden, dadurch gekennzeichnet, dass mindestens eine (7, 10 bzw. 25 bis 29) dieser Komponenten (1, 5, 7, 10, 12 bzw. 24 bis 29) zur Bildung von mindestens zwei (8, 9, 11 bzw. 31, 32, 33, 36 bis 40, 43 bis 47) der genannten Elemente (2, 6, 8, 9, 11 bzw. 31, 32, 33, 36 bis 40, 43 bis 47) dient.

2. Massen- und Kraftmessgerät nach Anspruch 1, dadurch gekennzeichnet, dass mindestens eine (7 bzw. 25, 26) der eine Blattfeder (6, 8 bzw. 31, 32, 33, 38, 39, 40) bildenden Komponenten (5, 7 bzw. 25, 26) auch zur Bildung eines Teiles (17 bzw. 34, 35, 41, 42) mindestens eines Übertragungsorganes (9 bzw. 36, 37, 43, 44) dient.

3. Massen- und Kraftmessgerät nach Anspruch 2 dadurch gekennzeichnet, dass der genannte Teil (17 bzw. 34, 35, 41, 42) des bzw. mindestens eines Übertragungsorganes (9 bzw. 36, 37, 43, 44) durch Nuten (13 bzw. 48, 49, 50, 51) von zur Bildung mindestens einer Blattfeder (8 bzw. 31, 32, 33, 38, 39, 40) dienenden Teilen (14, 15 bzw. 31, 32, 33, 38, 39, 40) der betreffenden Komponente (7 bzw. 25, 26) getrennt ist.

4. Massen- und Kraftmessgerät nach Anspruch 2 oder 3, dadurch gekennzeichnet, dass die zur Bildung einer Blattfeder (8) sowie eines Teils (17) des Übertragungsorganes (9) dienende Komponente (7) drei zusammenhängende, streifenförmige Teile (14, 15, 16) aufweist, die zusammen die Blattfeder (8) bilden.

5. Massen- und Kraftmessgerät nach einem der Ansprüche 2 bis 4, dadurch gekennzeichnet, dass das bzw. mindestens ein Übertragungsorgan (9 bzw. 36, 37, 43, 46) von dem ein Teil (17 bzw. 34, 35, 41, 42) von einer auch zur Bildung mindestens einer Blattfeder (8 bzw. 31, 32, 33) dienenden Komponente (7 bzw. 25, 26) gebildet ist, noch einen zweiten Teil (19 bzw. 58 bis 61) aufweist, der von einer anderen Komponente (10 bzw. 27) gebildet ist, die auch zur Bildung des Lastträgers (11 bzw. 46, 47) dient.

6. Massen- und Kraftmessgerät nach Anspruch 5, dadurch gekennzeichnet, dass das bzw. jedes die genannten zwei Teile (17, 19 bzw. 34, 35, 58 bis 61) aufweisende Übertragungsorgan (9 bzw. 36, 37, 43, 44) zusätzlich einen dritten Teil (20) einer anderen Komponente (12 bzw. 28, 29) aufweist, die nur zur Bildung des dritten Teiles (20) des Übertragungsorganes dient.

7. Massen- und Kraftmessgerät nach einem der Ansprüche 1, 2, 3, 5, 6, dadurch gekennzeichnet, dass ein Verbindungsstück (30) mittels Blattfedern (33, 40) am Gestell (45) parallel geführt ist, und dass ein zweiteiliger Lastträger (46, 47) mittels Blattfedern (31, 32, 38, 39) an diesem Verbindungsstück (30) ebenfalls parallel geführt ist.

8. Massen- und Kraftmessgerät nach Anspruch 7, dadurch gekennzeichnet, dass es zwei an einer (33) der Blattfedern (33, 40) der Parallelführung des Verbindungsstückes (30) angeschlossene Übertragungsorgane (43, 44) und zwei je an einer der Blattfedern (31, 32) der Parallelführung des Lastträgers (46, 47) angeschlossene Übertragungsorgane (36, 37) aufweist.

9. Massen- und Kraftmessgerät nach Anspruch 8, dadurch gekennzeichnet, dass eine erste Komponente (25) zur Bildung von Blattfedern (31, 32 und 33) der beiden Parallelführungen und von Teilen (41, 42) der genannten Übertragungsorgane (43, 44) dient.

10. Massen- und Kraftmessgerät nach Anspruch 9, dadurch gekennzeichnet, dass eine zweite Komponente (26) zur Bildung von Blattfedern (38, 39 und 40) der beiden Parallelführungen und von Teilen (34, 35) der genannten Übertragungsorgane (36, 37), dient.

11. Massen- und Kraftmessgerät nach Anspruch 10, dadurch gekennzeichnet, dass eine der Komponenten (27) zur Bildung des Gestelles (45), des Lastträgers (46, 47) und von Teilen (58, 59, 60, 61) aller vier Übertragungsorgane (36, 37, 43, 44), dient.

12. Massen- und Kraftmessgerät nach Anspruch 11, dadurch gekennzeichnet, dass eine Komponente (28) nur zur Bildung eines Teiles der genannten Übertragungsorgane (36, 37) und eine andere Komponente (29) nur zur Bildung eines andern Teiles der genannten Übertragungsorgane (43, 44), dienen.

13. Massen- und Kraftmessgerät nach Anspruch 1, dadurch gekennzeichnet, dass die zur Parallelführung dienenden Blattfedern (6, 8 bzw. 31, 32, 33, 38, 39, 40) in zwei mindestens annähernd parallelen, übereinander liegenden Ebenen liegen.

14. Massen- und Kraftmessgerät nach Anspruch 1, dadurch gekennzeichnet, dass die zur Parallelführung dienenden Blattfedern paarweise konvergierend angeordnet sind.

15. Massen- und Kraftmessgerät nach einem der Ansprüche 1 bis 14, dadurch gekennzeichnet, dass der durch einen Abschnitt eines Extrusionsstranges gebildete Block zwischen den beiden genannten, übereinander angeordneten Komponenten (5, 7 bzw. 25, 26) einen freien, vorzugsweise durch ein Loch gebildeten Zwischenraum aufweist, der sich in der Längsrichtung des Extrusionsstranges über den ganzen Block erstreckt.

16. Massen- und Kraftmessgerät nach einem der Ansprüche 1 bis 15, dadurch gekennzeichnet, dass es im wesentlichen aus den aus dem Block gefertigten Elementen (2, 6, 8, 9, 11 bzw. 31, 32, 33, 36 bis 40, 43 bis 47) und dem Mess-System (22 bzw. 62) besteht.

**Claims**

1. Mass an force measuring device with a frame (2 or 45), a load carrier (11 or 46, 47) guided perpendicularly and parallelly by means of a parallel guide consisting of at least two leaf springs (6, 8 or 31, 32, 33, 38, 39, 40) arranged one above the other, a rigid measuring system (22 or 62) and at least one elastically constructed transmission organ (9 or 36, 37, 43, 44), which transmits a part of the weight of the mass to be measured or of the force to be measured to the measuring system (22 or 62), the leaf springs (6, 8 or 31, 32, 33, 38, 39, 40) being connected with the frame (2 or 45) and the load carrier (11 or 46, 47), wherein the named elements (2, 6, 9, 11, 14, 15, 16, 22 or 31, 32, 33, 36 to 40, 43 to 47, 62) of the measuring device with the exception of the measuring system (22 or 62) consist of a single, one-piece profiled block consisting in cross-section of several components (1, 5, 7, 10, 12 or 24 to 29) and wherein two components (5, 7, or 25, 26) arranged one above the other each from at least a respective one of the leaf springs (6, 8 or 31, 32, 33, 38, 39, 40), characterised thereby, that at least one of these components (1, 5, 7, 10, 12 or 24 to 29) serves for the formation of at least two (8, 9, 11 or 31, 32, 33, 36 to 40, 43 to 47) of the named elements (2, 6, 8, 9, 11 or 31, 32, 33, 36 to 40, 43 to 47).

2. Mass and force measuring device according to claim 1, characterised thereby, that at least one (7 or 25, 26) of the components (5, 7 or 25, 26) forming a leaf spring (6, 8 or 31, 32, 33, 38, 39, 40) also serves for the formation of a part 17 or 34, 35, 41, 42) of a least one transmission organ (9 or 36, 37, 43, 44).

3. Mass and force measuring device according to claim 2, characterised thereby, that the named components (1, 5, 7, 10, 12 or 24 to 29) of the or at least one transmission organ (9 or 36, 37, 43, 44) is separated by grooves (13 or 48, 49, 50, 51) of parts (14, 15 or 31, 32, 33, 38, 39, 40), which serve for the formation of at least one leaf spring (8 or 31, 32, 33, 38, 39, 40), of the concerned component (7 or 25, 26).

4. Mass and force measuring device according to claim 2 or 3, characterised thereby, that the component (7), which serves for the formation of a leaf spring (8) as well as of a part (17) of the transmission organ (9), displays three contiguous strip-shaped parts (14, 15, 16) which together form the leaf spring (8).

5. Mass and force measuring device according to one of the claims 2 to 4, characterised thereby, that the or at least one transmission organ (9 or 36, 37, 43, 44), of which a part (17 or 34, 35, 41, 42) is formed by a component (7 or 25, 26) serving also for the formation of at least one leaf spring (8 or 31, 32, 33), displays still a second part (19 or 58 to 61), which is formed by another component (10 or 27), which also serves for the formation of the load carrier (11 or 46, 47).

6. Mass an force measuring device according to claim 5, characterised thereby, that the or each transmission organ (9 or 36, 37, 43, 44), which displays the named two parts (17, 19 or 34, 35, 58 to 61), additionally displays a third part (20) of another component (12 or 28, 29), which serves only for the formation of the third part (20) of the transmission organ.

7. Mass and force measuring device according to one of the claims 1, 2, 3, 5 and 6, characterised thereby, that a connecting piece (30) is guided parallelly at the frame (45) by means of leaf springs (33, 40) and that a two-part load carrier (46, 47) is likewise parallelly guided at this connecting piece (30) by means of leaf springs (31, 32, 38, 39).

8. Mass and force measuring device according to claim 7, characterised thereby, that it displays two transmission organs (43, 44) connected to one (33) of the leaf springs (33, 40) of the parallel guide of the connecting piece (30) and two transmission organs (36, 37) each connected to a respective one of the leaf springs (31, 32) of the parallel guide of the load carrier (46, 47).

9. Mass and force measuring device according to claim 8, characterised thereby, that a first component (25) serves for the formation of leaf springs (31, 32 and 33) of both the parallel guides and of parts (41, 42) of the named transmission organs (43, 44).

10. Mass and force measuring device according to claim 9, characterised thereby, that a second component (26) serves for the formation of leaf springs (38, 39 and 40) of both parallel guides and of parts (34, 35) of the named transmission organs (36, 37).

11. Mass and force measuring device according to claim 10, characterised thereby, that one of the components (27) serves for the formation of the frame (45), the load carrier (46, 47) and of parts (58, 59, 60, 61) of all four transmission organs (36, 37, 43, 44).

12. Mass and force measuring device according to claim 11, characterised thereby, that one of the components (28) serves only for the formation of one part of the named transmission organs (36, 37) and another component (29) serves only for the formation of another part of the named transmission organs (43, 44).

13. Mass and force measuring device according to claim 1, characterised thereby, that the leaf springs (6, 8 or 31, 32, 33, 38, 39, 40) serving for the parallel guidance lie in two at least approximately parallel planes lying one above the other.

14. Mass and force measuring device according to claim 1, characterised thereby, that the leaf springs serving for the parallel guidance are arranged to be converging in pairs.

15. Mass and force measuring device according to one of the claims 1 to 14, characterised thereby, that the block, formed by a portion of an extruded strand, between both the named components (5, 7 or 25, 26) arranged one above the other displays a free intermediate space which extends over the entire block in the longitudinal direction of the extruded strand and is preferably formed by a hole.

16. Mass and force measuring device according to one of the claims 1 to 15, characterised thereby, that it consists substantially of the elements (2, 6, 8, 9, 11 or 31, 32, 33, 36 to 40, 43 to 47) produced from the block and the measuring system (22 or 62).

**Revendications**

1. Appareil de mesure des masses et des forces comportant un bâti (2 ou 45), un organe récepteur (11 ou 46, 47) de la charge, qui est guidé, parallèlement et verticalement, au moyen d'un guidage à parallélogramme constitué d'au moins deux lames de ressort (6, 8 ou 31, 32, 33, 38, 39, 40) disposés l'une au-dessus de l'autre, un système de mesure rigide (22 ou 62) et au moins un organe de transmission (9 ou 36, 37, 43, 44), de constitution élastique, qui transmet une partie du poids de la masse à mesurer ou de la force à mesurer au système de mesure (22 ou 62), les lames de ressort (6, 8 ou 31, 32, 33, 38, 39, 40) étant venues d'une pièce avec le bâti (2 ou 45) et avec l'organe récepteur de la charge (11 ou 46, 47), étant précisé qu'à l'exception du système de mesure (22 ou 62), les éléments mentionnés (2, 6, 9, 11, 14, 15, 16, 22 ou 31, 32, 33, 36 à 40, 43 à 47, 62) de l'appareil de mesure sont façonnés à partir d'un unique bloc profilé d'une seule pièce, constitué, en coupe, de plusieurs composants (1, 5, 7, 10, 12, ou 24 à 29) et étant précisé que deux composants (5, 7, ou 25, 26), disposés l'un au-dessus de l'autre, forment respectivement au moins l'une des lames de ressort (6, 8 ou 31, 32, 33, 38, 39, 40), caractérisé en ce qu'au moins l'un (7, 10, ou 25 à 29) de ces composants (1, 5, 7, 10, 12, ou 24 à 29) sert à former au moins deux (8, 9, 11 ou 31, 32, 33, 36 à 40, 43 à 47) des éléments mentionnés (2, 6, 8, 9, 11 ou 31, 32, 33, 36 à 40, 43 à 47).

2. Appareil de mesure des masses et des forces selon la revendication 1, caractérisé en ce qu'au moins l'un (7 ou 25, 26) des composants (5, 7 ou 25, 26) formant une lame de ressort (6, 8 ou 31, 32, 33, 38, 39, 40) sert également à former une partie (17 ou 34, 35, 41, 42) d'au moins un organe de transmission (9 ou 36, 37, 43, 44).

3. Appareil de mesure des masses et des forces selon la revendication 2, caractérisé en ce que la partie mentionnée (17 ou 34, 35, 41, 42) de l'organe de transmission, ou d'au moins un organe de transmission, (9 ou 36, 37, 43, 44) est séparée, par des rainures (13 ou 48, 49, 50, 51) d'avec les parties (14, 15 ou 31, 32, 33, 38, 39, 40) du composant en question (7 ou 25, 26), qui servent à former au moins une lame de ressort (8 ou 31, 32, 33, 38, 39, 40).

4. Appareil de mesure des masses et des forces selon la revendication 2 ou 3, caractérisé en ce que le composant (7), qui sert à former une lame de ressort (8) ainsi qu'une partie (17) de l'organe de transmission (9), présente trois parties (14, 15, 16), en forme de bandes, qui sont venues d'une pièce et forment ensemble la lame de ressort (8).

5. Appareil de mesure des masses et des forces selon l'une des revendications 2 à 4, caractérisé en ce que l'organe de transmission, ou au moins un organe de transmission, (9 ou 36, 37, 43, 46), dont une partie (17 ou 34, 35, 41, 42) est formée d'un composant (7 ou 25, 26) qui sert également à former au moins une lame de ressort (8 ou 31, 32, 33), présente encore une seconde partie (19 ou 58 à 61) qui est formée par un autre composant (10 ou 27) qui sert également à former l'organe récepteur (11 ou 46, 47) de la charge.

6. Appareil de mesure des masses et des forces selon la revendication 5, caractérisé en ce que l'organe de transmission, ou chaque organe de transmission, (9 ou 36, 37, 43, 44) qui présente les deux parties mentionnées (17, 19 ou 34, 35, 58 à 61), présente en outre une troisième partie (20) d'un autre composant (12 ou 28, 29) qui ne sert qu'à former la troisième partie (20) de l'organe de transmission.

7. Appareil de mesure des masses et des forces selon l'une des revendications 1, 2, 3, 5, 6, caractérisé en ce qu'une pièce de liaison (30) est guidée, parallèlement au bâti (45), au moyen de lames de ressort (33, 40), et en ce qu'un organe récepteur de la charge, en deux parties (46, 47), est également guidé, parallèlement à cette pièce de liaison (30), au moyen de lames de ressort (31, 32, 38, 39).

8. Appareil de mesure des masses et des forces selon la revendication 7, caractérisé en ce qu'il présente deux organes de transmission (43, 44) reliés à l'une (33) des lames de ressort (33, 40) du guidage à parallélogramme de la pièce de liaison (30) et deux organes de transmission (36, 37) reliés respectivement à l'une des lames de ressort (31, 32) du guidage à parallélogramme de l'organe récepteur de la charge (46, 47).

9. Appareil de mesure des masses et des forces selon la revendication 8, caractérisé en ce qu'un premier composant (25) sert à former les lames de ressort (31, 32 et 33) des deux guidages à parallélogramme et les parties (41, 42) des organes de transmission mentionnés (43, 44).

10. Appareil de mesure des masses et des forces selon la revendication 9, caractérisé en ce qu'un second composant (26) sert à former les lames de ressort (38, 39 et 40) des deux guidages à parallélogramme et les parties (34, 35) des organes de transmission mentionnés (36,37).

11. Appareil de mesure des masses et des forces selon la revendication 10, caractérisé en ce que l'un des composants (27) sert à former le bâti (45), l'organe récepteur de la charge (46, 47) et les parties (58, 59, 60, 61) des quatre organes de transmission (36, 37, 43, 44).

12. Appareil de mesure des masses et des forces selon la revendication 11, caractérisé en ce qu'un composant (28) ne sert qu'à former une partie des organes de transmission mentionnés (36, 37) et en ce qu'un autre composant (29) ne sert qu'à former une autre partie des organes de transmission mentionnés (43, 44).

13. Appareil de mesure des masses et des forces selon la revendication 1, caractérisé en ce que les lames de ressort (6, 8 ou 31, 32, 33, 38, 39, 40), qui servent au guidage en parallèle, sont situées dans deux plans au moins approximativement parallèles, situés l'un au-dessus de l'autre.

14. Appareil de mesure des masses et des forces selon la revendication 1, caractérisé en ce que les lames de ressort qui servent au guidage en parallèle sont disposées convergentes par paire.

15. Appareil de mesure des masses et des forces selon l'une des revendications 1 à 14, caractérisé en ce que le bloc formé par une portion d'un profilé extrudé présente, entre les deux composants (5, 7 ou 25, 26), mentionnés, disposés l'un au-dessus de l'autre, un espace intermédiaire libre, de préférence formé par un trou, qui s'étend sur la totalité du bloc dans la direction longitudinale du profilé extrudé.

16. Appareil de mesure des masses et des forces selon l'une des revendications 1 à 15, caractérisé en ce qu'il est essentiellement constitué des éléments (2, 6, 8, 9, 11 ou 31, 32, 33, 36 à 40, 43 à 47) fabriqués à partir du bloc, d'une part, et du système de mesure (22 ou 62), d'autre part.

Fig. 1

12    7
10    5    1

Fig. 2

16
21    17    15    13
19    18
9
8
4
14
20
6
23
2
11
22    3

F

Fig. 3    21

G    9    17    8
D
E    A
23    6
11    B
22    C

2

**Fig. 4**

**Fig. 5**

**Fig.6**

Fig. 7

Fig. 8

Fig. 9